# EUROPEAN PATENT SPECIFICATION

(11) **EP 0 848 475 B1**
(45) Date of publication and mention of the grant of the patent: **06.03.2002**
(21) Application number: 97120866.5
(22) Date of filing: 27.11.1997
(51) Int. Cl.: H02K 3/20, H02K 3/52

(54) **Rotor for synchronous motor**
Rotor für einen Synchronmotor
Rotor pour un moteur synchrone

(30) Priority: 09.12.1996 JP 32847296
(43) Date of publication of application: 17.06.1998
(73) Proprietor: Hitachi, Ltd., Tokyo (JP)
(72) Inventor: Yoshinari, Yoshitaka, Hitachi-shi, Ibaraki 316 (JP); Yamashina, Mitsunori, Hitachi-shi, Ibaraki 316 (JP); Nitoube, Mitsuhiro, Hitachi-shi, Ibaraki 317 (JP)
(74) Representative: Strehl Schübel-Hopf & Partner

(56) References cited:
- BE-A- 563 642
- FR-A- 2 220 914
- US-A- 2 815 461
- US-A- 3 870 912
- US-A- 4 358 698
- US-A- 4 814 656
- US-A- 5 177 390

## Description

### BACKGROUND OF THE INVENTION

The present invention relates to a rotor and a synchronous motor having the rotor, particularly a synchronous motor of large capacity as used for driving a large-scale equipment. It especially relates to the configuration of a short-circuit ring and an iron core support plate.

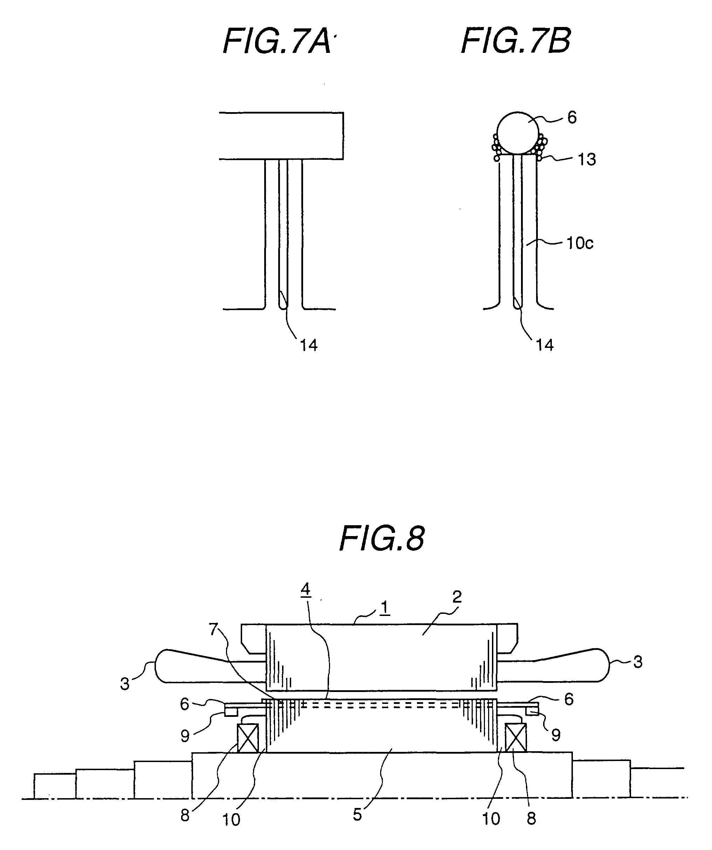

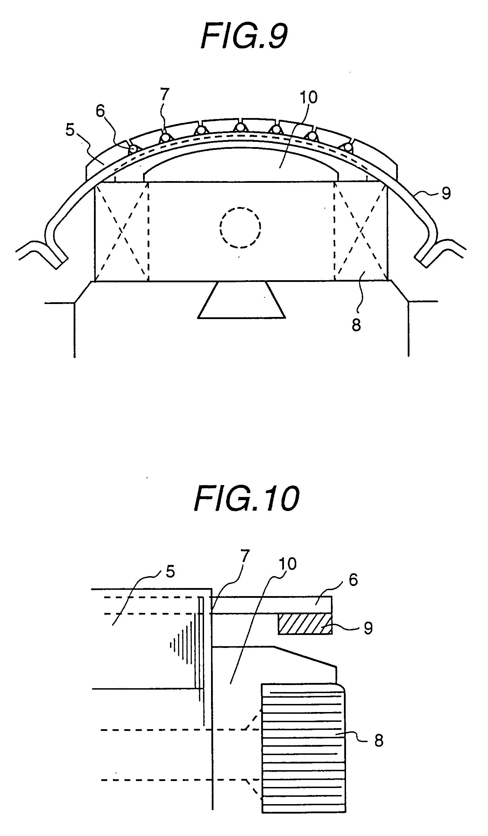

Figures 8 to 10 illustrate the rotor of a conventional synchronous motor, in which iron core support plates 10 supporting a rotor core 5 therebetween along a rotational axis of the rotor, and a short-circuit ring 9 electrically shorting respective damper bars 6 are separated. The short-circuit ring 9 is not fixed at the inner diameter side, so that centrifugal forces, torsion or electric resonance sometimes cause damage to the damper bar 6. This is a serious problem especially in a motor used for actuating a rolling mill, which is frequently accelerated and decelerated in normal and reverse rotation and is exposed to heavy shocks when slabs are fed into the rolling mill.

To avoid the above problem, JP-A-58-39231 uses a technique in which a dove tail groove is provided for the iron core support plate, and a short-circuit ring. By this arrangement, centrifugal forces become small and heat elongation in the axial direction caused by current flowing through the damper bar in starting or sudden load change and torsion due to shocks are reduced.

Furthermore, JP-A-56-145752 discloses an iron core support plate used as the short-circuit ring, whereby production costs become low due to a reduction in the number of components. Centrifugal forces, torsion and the resonance are also considered.

However, the above prior art makes it necessary to produce the short-circuit ring and the iron core support plate separately, thereby increasing the number of components and production costs. While the short-circuit ring is fixed in an adjacent groove and the centrifugal force becomes small, the fact that the circuit ring is not fixed in place between poles entails the problem that the joining portion may be damaged in case of a large diameter rotor and the short-circuit ring being fixed between the poles.

There is also a chance for the damper bar cage winding to be damaged at the joining portion due to heat elongation of the damper bar when sudden load changes occur or during start-up, because the entire circumference of damper bar is tightly joined. Moreover, the damper bar may become damaged by compressive stress. If the damper bar is not joined but fitted, the problem of heat elongation does not affect the damper bar, however, its electrical characteristic deteriorate with age, so that it may lose its function as a short-circuit ring.

US-A-3,870,912 discloses a rotor for a synchronous motor with the features set forth in the first part of claim 1. The peripheral portion of the iron core is provided with a plurality of axially extending slots and a damper bar is inserted in each slot. The damper windings are welded to heads of beam pillars that extend radially from the periphery of support plates.

### SUMMARY OF THE INVENTION

It is an object of the present invention to provide a rotor for a synchronous motor, which has improved mechanical strength and reliability while maintaining good electrical characteristics.

The invention meets this object by the rotor defined in claim 1. The slits provided in the beam pillars to which the damper bars are welded cause a relaxation of stress that may build up at the connection between the damper bars and the beam pillars.

### BRIEF DESCRIPTION OF THE DRAWINGS

Figure 1 is a half-sectional view of a synchronous motor, which is not an embodiment of the invention.
Figure 2 is a partial side view of the rotor of Figure 1.
Figure 3 is a partial side view of the rotor of a synchronous motor as an embodiment of the present invention.
Figure 4 is an enlarged view of the rotor of Figure 3.
Figure 5 shows the joining portion of the damper bar and the iron core support plate in an embodiment of the present invention.
Figures 6A and 6B show the joining portion of the damper bar and the iron core support plate in another embodiment of the present invention.
Figures 7A and 7B show the joining portion of the damper bar and the iron core support plate in a third embodiment of the present invention.
Figures 8 to 10 have been referred to above and illustrate the rotor of a conventional synchronous motor.

### DETAILED DESCRIPTION OF THE PREFERRED EMBODIMENTS

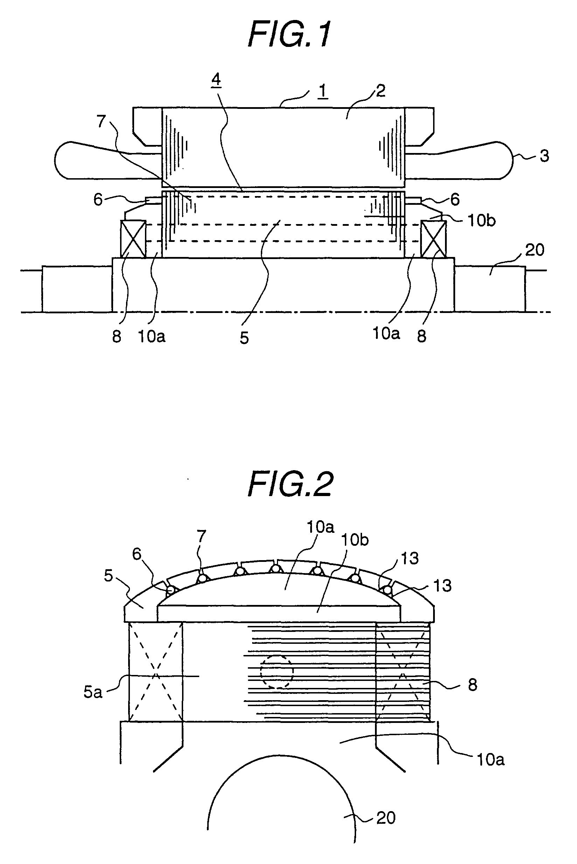

As shown in Figures 1 and 2, a stator 1 has a stator core 2 carrying a stator winding 3. A rotor 4 is disposed inside the stator 1 and is freely rotatable about the central axis.

A rotor core 5 has a plurality of slots 7 arranged at predetermined mutual distances and extending to the periphery of the rotor. The slots 7 extend continually in the axial direction. A shaft 20 is inserted in the rotor 5, and damper bars 6, which are formed of copper material and are not insulated electrically, are inserted in the plurality of slots 7.

Both ends of the each damper bar 6 are electrically joined to iron core support plates 10a to form an iron short-circuit ring. A field winding 8 is wound around the circumference of a salient pole 5a forming a magnetic pole of the rotor core 5. Furthermore, the end of each iron core support plate 10a extends in the axial direction so as to project outside of the field winding 8, thus constituting a field winding holder 10b to prevent the end of the field winding 8 from breaking-down due to centrifugal forces. The joining portion 13 of the damper bar 6 and the iron core support plate 10a is formed by TIG welding, for example.

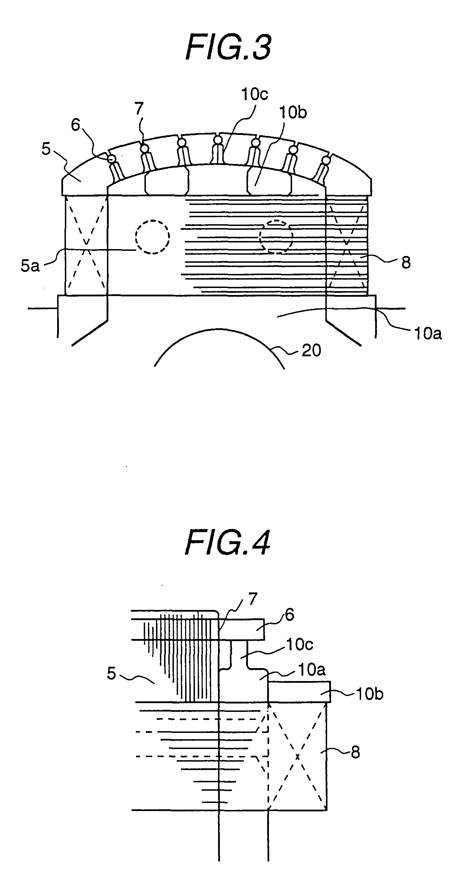

Figures 3 to 5 show an embodiment of the invention, in which stress exerted on the joining portion of the damper bar 6 and the iron core support plate 10a is absorbed and relaxed.

As shown in these figures, the iron core support plate 10a is formed with beam like pillars 10c which extend radially from the periphery of the support plate 10a. The head of each beam pillar 10c forms a joining portion 13 where the damper bar 6 are joined to the iron core support plate 10a by TIG welding.

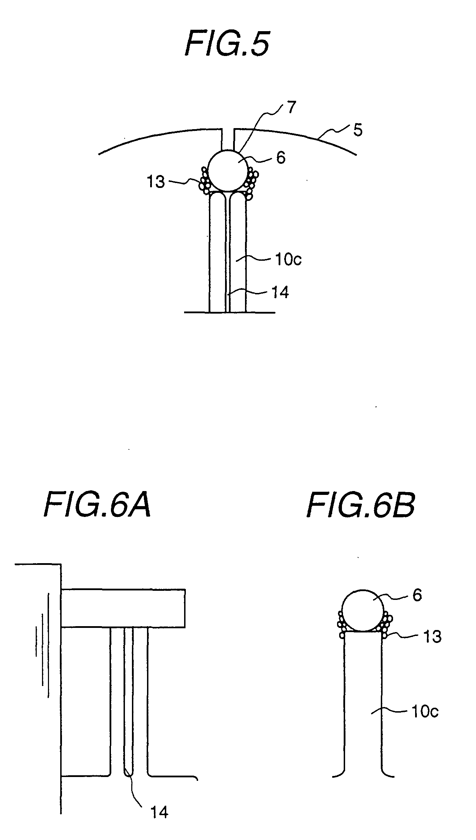

As shown in Figure 5, the beam pillar 10c is provided with a slit 14, which serves to relax the stress in the peripheral direction. It is especially effective to relax stress due to sudden torque changes and stress from shocks in the peripheral direction.

Electric current flows through the damper bar 6 at start-up, acceleration and deceleration of the motor, and sudden load changes, whereby the damper bar 6 is heated and extends in the axial direction. This imposes stress on the joining portion (including the neighbourhood thereof). When this happens, the slit beam pillar 10c as shown in Figures 5 to 7 is deformed and the damper bar 6 is free to undergo thermal elongation.

A synchronous motor using the rotor of this embodiment is especially effective for driving equipment with large load variations, such as rolling mills.

Figure 6A is a front elevation view and Figure 6B is a side view of Figure 6A, showing the joining portion of the damper bar 6 and the iron core support plate in accordance with another embodiment of the present invention. As seen in Figure 6A, the slit 14 is provided in the direction of the rotational axis of the rotor. Therefore, the slit 14 it is effective for relaxing stress, especially stress due to heat elongation or thrust in the axial direction of the damper bar 6.

Figure 7A is a front elevation view, and Figure 7B is a side view of Figure 7A, showing the joining portion of the damper bar and the iron core support plate in accordance with a third embodiment of the invention. As seen in these figures, the slit 14 is provided in both the peripheral direction and the axial direction of the beam pillar 10c. Thus, stresses in both the peripheral and the axial direction are effectively relaxed.

## Claims

1. A rotor for a synchronous motor having
an iron core (5) provided in its peripheral portion with a plurality of axially extending slots (7),
a plurality of damper bars (6) one inserted in each slot (7),
a field winding (8) wound around a magnetic pole of said core (5),
support plates (10a) supporting said core (5) between them, and
beam pillars (10c) radially extending from the periphery of said support plates (10a) so as to be short-circuited with each other, each beam pillar (10c) having a head welded (13) to a respective damper bar (6)
**characterised in that** each beam pillar (10c) is provided with a slit (14).

2. The rotor of claim 1, wherein the beam pillars (10c) are slit (14) in the axial direction and/or the peripheral direction of the rotor.

3. A synchronous motor having a rotor as defined in claim 1 or 2.

## Patentansprüche

1. Rotor für einen Synchronmotor mit
einem Eisenkern (5), der in seinem Umfangsbereich mit mehreren axial verlaufenden Schlitzen (7) versehen ist,
mehreren Dämpferstäben (6), von denen jeweils einer in jeden Schlitz (7) eingefügt ist,
einer auf einen Magnetpol des Kerns (5) gewickelten Feldwicklung (8),
Trägerplatten (10a), die den dazwischen befindlichen Kern (5) tragen, und
vom Umfang der Trägerplatten (10a) radial ausgehenden und miteinander kurzgeschlossenen Säulen (10c), deren jede einen mit dem betreffenden Dämpferstab (6) verschweißten (13) Kopf aufweist,
**dadurch gekennzeichnet, daß** jede Säule (10c) mit einem Schlitz (14) versehen ist.

2. Rotor nach Anspruch 1, wobei die Säulen (10c) in Axial- oder Umfangsrichtung des Rotors geschlitzt (14) sind.

3. Synchronmotor mit einem Rotor nach Anspruch 1 oder 2.

## Revendications

1. Rotor pour moteur synchrone comportant
un noyau en fer (5) pourvu dans sa portion périphérique d'une pluralité de fentes (7) s'étendant axialement,
une pluralité de barres d'amortissement (6) insérées chacune dans une fente (7),
un enroulement inducteur (8) enroulé autour d'un pôle magnétique dudit noyau (5),
des plaques de support (10a) supportant ledit noyau (5) entre elles, et
des montants-poutres (10c) ayant une tête soudée (13) à une barre d'amortissement respective (6),
**caractérisé en ce que** chaque montant-poutre (10c) est pourvu d'une fente (14).

2. Rotor selon la revendication 1, dans lequel les montants-poutres (10c) sont fendus (14) dans la direction axiale et/ou la direction périphérique du rotor.

3. Moteur synchrone ayant un rotor tel que défini dans la revendication 1 ou 2.
